# EUROPEAN PATENT APPLICATION

(11) **EP 4 607 160 A1**
(43) Date of publication of application: **27.08.2025**
(21) Application number: 24159564.4
(22) Date of filing: 26.02.2024
(51) Int. Cl.: G01F 23/284, G01F 23/80, G01F 25/20

(54) **GUIDED WAVE RADAR LEVEL GAUGE AND METHOD OF DETERMINING A LOCATION OF AN INTERFACE USING THE GUIDED WAVE RADAR LEVEL GAUGE**

(71) Applicant: Rosemount Tank Radar AB, 435 23 Mölnlycke (SE)
(72) Inventor: FRIEDMANN, Anders, 582 46 LINKÖPING (SE); ERIKSSON, Mikael, 593 52 VÄSTERVIK (SE)
(74) Representative: Kransell & Wennborg KB

(57) **Abstract**

A guided wave radar level gauge (100) for determining a fill level of a product (102) contained in a tank (104) comprising: a measurement unit (106); a probe (110); and control circuitry configured to: transmit a signal along the probe; receive a reflected signal; detect a first peak in the received signal, the first peak having a first amplitude exceeding a first threshold amplitude; determine that no second peak having an amplitude exceeding a second threshold amplitude is detected; apply a sliding window peak detection algorithm to the signal to detect a second peak in the signal; and determining a location of a material interface based on the location of the second peak.

## Description

### Field of the Invention

The present invention relates to a guided wave radar level gauge and to a method for operating the guided wave radar level gauge. In particular, the present invention is aimed at guided wave radar level gauge for saturated steam applications.

### Background of the Invention

Radar level gauge (RLG) systems are in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a probe acting as a waveguide. The probe is generally arranged to extend vertically from the top towards the bottom of the tank.

The transmitted electromagnetic signals are reflected at the surface of the product, and the reflected signals are received by a receiver or transceiver comprised in the radar level gauge. Based on the transmitted and reflected signals, the distance to the surface of the product can be determined.

For a tank holding different substances like water and oil which may not be clearly separated, there may be difficulties in measuring the precise location of the material interface. In an ideal scenario, where distinct layers of materials exist, each with a unique dielectric constant, the radar waves reflect back to the sensor with clear differentiation, allowing for accurate interface detection. However, when these layers mix, the resulting interface becomes indistinct.

The challenges involved in measuring complex interfaces are compounded by the fluctuating nature of the echo amplitude in such mixed-layer scenarios. Unlike in clear layer separations where the echo from each layer remains relatively consistent, the echo from a mixed or emulsified interface can vary in strength and clarity which makes it difficult for the radar gauge to maintain a stable and accurate reading of the interface level.

Accordingly, it is desirable to provide improved solutions for providing accurate level measurements in applications when there is no clear separation between products.

### Summary

In view of above-mentioned and other drawbacks of the prior art, it is an object of the present invention to provide a radar level gauge and a method for determining a location of an interface in a tank comprising an emulsion of products.

According to a first aspect of the invention, there is provided a guided wave radar level gauge for determining a fill level of a product contained in a tank comprising: a measurement unit comprising a transceiver configured to provide a transmit signal, and to receive a reflected signal resulting from a reflection of the transmit signal at a surface of the product; a probe connected to the transceiver and configured to propagate the transmit signal towards the surface and to return the reflected signal to the transceiver; control circuitry configured to determine the fill level based on the received reflected signal, wherein the control circuitry is further configured to: transmit a signal along the probe; receive a reflected signal; detect a first peak in the received signal, the first peak having a first amplitude exceeding a first threshold amplitude; determine that no second peak having an amplitude exceeding a second threshold amplitude is detected; apply a sliding window peak detection algorithm to the signal to detect a second peak in the signal; and determining a location of a material interface based on the location of the second peak.

The described radar level gauge is advantageously used in applications where the tank comprises a plurality of different materials and where an interface between materials comprises a mix or emulsion of the materials. Even in an emulsified or mixed interface, it is desirable to determine the location of the interface, and a reflection of the signal at the interface giving rise to an interface peak in the received signal can be expected. In the present context, the first echo generally refers to the echo which appears closest to the top of the probe. The second peak is thereby generally the next peak appearing as seen from the top of the probe after the first peak. However, in some situations, there may be known echoes from fixed features along the length of the probe which can be disregarded.

The present invention is based on the realization that when no interface peak is found in the signal using thresholding, it is advantageous to use a sliding window peak detection algorithm for detecting an interface peak in the signal. The described approach of using a sliding window peak detection algorithm is thereby applied when no interface peak is found using a comparison with a predetermined threshold amplitude.

An advantage of the claimed approach that the use of a sliding window peak detection algorithm allows the system to adapt to variations in the reflected signal. In environments where the interface between substances is not well-defined, or where the signal may be weakened or disrupted, sliding window peak detection algorithm provides a more dynamic and responsive way to analyze the received signal. This adaptability leads to more accurate measurements even in fluctuating conditions.

Moreover, using the sliding window algorithm, the system can effectively identify peaks that may not be immediately apparent such as low amplitude signals which might be overlooked by conventional detection methods. The described approach may also enhance the ability to discern between actual interface signals and random noise or false positives. By requiring the detection of a first peak exceeding a certain threshold amplitude and then applying the sliding window algorithm for the second peak, the system can filter out insignificant variations in the signal, focusing on meaningful information.

Additionally, the claimed approach increases the versatility of the radar level gauge to operate effectively in a variety of tank environments and with different types of products in many different situations where the product layers do not have clearly defined boundaries.

According to an example embodiment, the control circuitry is further configured to determine an energy content of the signal for each position of the sliding window, and to determine the location of the interface as the window position having the highest energy content. By assessing the energy content of the signal at each position of the sliding window, identifying the interface as the point with the highest energy content, may improve the accuracy and reliability of the interface detection especially in complex scenarios where the interface is not clearly defined.

According to an example embodiment, the control circuitry is further configured to determine that the first detected echo exceeding the first threshold amplitude represent a surface of the product in the tank. The control circuitry can thereby be configured so that it is assumed that the first detected echo exceeding the first threshold amplitude, meaning the echo closest the top of the probe and closest to the top of the tank, is defined as the surface echo. The first threshold amplitude can thereby be defined as a surface threshold amplitude.

According to an example embodiment, the control circuitry is further configured to determine that the first detected echo after the surface echo exceeding the second threshold amplitude is an interface echo representing an interface of the product in the tank. Thereby, it is defined that the next echo exceeding the second threshold amplitude following the surface echo is the interface echo. Accordingly, the interface echo is not necessarily the echo with the largest amplitude after the surface echo.

According to an example embodiment, the control circuitry is further configured to adjust the determined location of the material interface based on known dielectric properties of the product in the tank. The calibration of the level measurement based on dielectric properties can significantly enhance measurement accuracy, especially in tanks containing substances with well-characterized dielectric properties.

According to an example embodiment, the first threshold amplitude and the second threshold amplitude are set based on propagation properties of the probe and on known properties of the product in the tank, thereby allowing for tailored settings for different tank environments and materials.

According to a second aspect of the invention, there is provided a method of determining a location of a material interface in a tank using a guided wave radar level gauge, the radar level gauge comprising a measurement unit comprising a transceiver configured to provide a transmit signal, and to receive a reflected signal resulting from a reflection of the transmit signal at a surface of the product; a probe connected to the transceiver and configured to propagate the transmit signal towards the surface and to return the reflected signal to the transceiver; control circuitry configured to determine the fill level based on the received reflected signal, the method comprising, by the control circuitry: transmitting a signal along the probe; receiving a reflected signal; detecting a first peak in the received signal, the first peak having a first amplitude exceeding a first threshold amplitude; determining that no second peak having an amplitude exceeding a second threshold amplitude is detected; applying a sliding window peak detection algorithm to the signal to detect a second peak in the signal; and determining a location of a material interface based on the location of the second peak.

Effects and features of this second aspect of the present invention are largely analogous to those described above in connection with the first aspect of the invention.

There is also provided a computer program product comprising program code for performing, when executed by the control circuitry, the described method, and a non-transitory computer-readable storage medium comprising instructions, which when executed by the control circuitry, cause the processing circuitry to perform the described method.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 schematically illustrates an exemplary tank arrangement comprising a guided wave radar level gauge system according to an example embodiment;
Fig. 2 is schematic illustration of a measurement unit comprised in the radar level gauge system of Fig 1;
Figs. 3A-B schematically illustrates exemplary tank arrangements comprising a guided wave radar level gauge system according to example embodiments;
Figs. 4A-B schematically illustrates reflected signals in exemplary tank arrangements comprising a guided wave radar level gauge system according to an example embodiment; and
Fig. 5 is a flow chart outlining the general steps of a method according to an example embodiment.

### Detailed Description of Example Embodiments

In the present detailed description, various embodiments of the system and method according to the present invention are mainly described with reference to a guided wave radar level gauge installed in a tank located on land. However, the described system and method is suitable for use in other areas such as in marine applications. Moreover, various embodiments of the present invention are mainly discussed with reference to a radar level gauge system with a signal propagation device in the form of a probe, and wireless communication capabilities.

It should be noted that this by no means limits the scope of the present invention, which also covers a radar level gauge system with another type of signal guiding device, as well as a radar level gauge system configured for wired communication, for example using a 4-20 mA current loop and/or other wired means for communication.

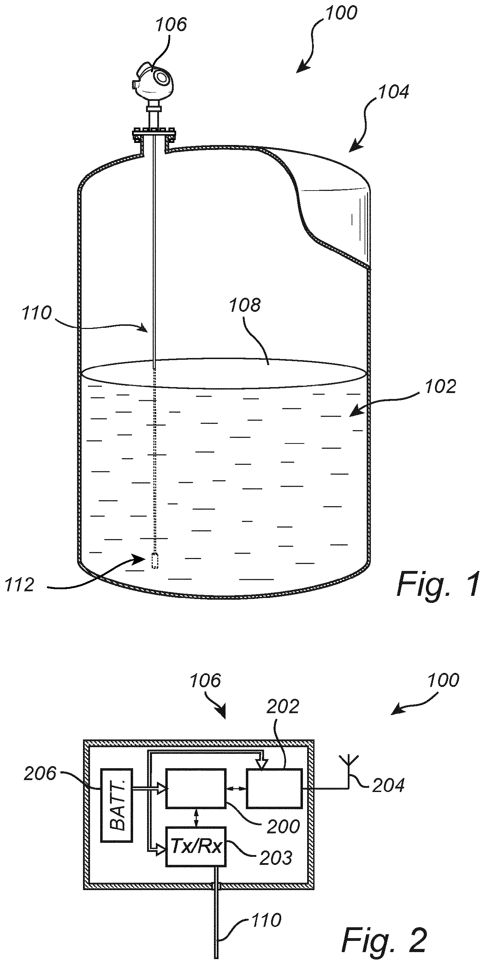

Fig. 1 schematically illustrates an exemplary radar level gauge system 100 of GWR (Guided Wave Radar) type installed to measure the level of a product 102 in a tank 104. The radar level gauge system 100 comprises a measurement unit 106 configured to provide a transmit signal, Tx, and to receive a reflected signal, Rx, resulting from a reflection of the transmit signal at a surface 108 of the product, a probe 110 connected to the measurement unit 106 and configured to propagate the transmit signal towards the surface 108 and to return the reflected signal to the measurement unit 106, a bottom reflector 112 arranged at a bottom of the probe 110, and measurement unit control circuitry arranged in the measurement unit 106 and configured to determine the fill level based on the received reflected signal.

The guided wave radar level gauge system 100 is installed to measure the filling level of a product 102 in the tank 104 and by analyzing the transmitted signal being guided by the probe 110 towards the surface 108 of the product 102, and a reflection signal traveling back from the surface 108, a filling level of the product 102 in the tank 104 can be determined.

The radar level gauge system 100 in Fig. 1 will now be described in more detail with reference to the schematic block diagram in Fig. 2. Referring to the schematic block diagram in Fig. 2, the measurement unit 106 of the exemplary radar level gauge system 100 in Fig. 1 comprises measurement control circuitry 200, which may also be referred to as a measurement control unit (MCU) 200, a wireless communication control unit (WCU) 202, a transceiver (Tx/Rx) 203, a communication antenna 204, and an energy storage, such as a battery 206.

As is schematically illustrated in Fig. 2, the MCU 200 controls the transceiver 203 to generate, transmit and receive electromagnetic signals. The transmitted signals pass through a feed-through to the probe 110, and the received signals pass from the probe 108 through the feed-through to the transceiver 203.

The MCU 200 determines the filling level of the product 102 in the tank 104 and provides a value indicative of the filling level to an external device, such as a control center, from the MCU 200 via the WCU 202 through the communication antenna 204. The radar level gauge system 100 may advantageously be configured according to the so-called WirelessHART communication protocol (IEC 620691).

Although the measurement unit 106 is shown to comprise an energy storage (battery 206) and to comprise devices (such as the WCU 202 and the communication antenna 204) for allowing wireless communication, it should be understood that both power supply and communication may be provided in different ways, such as through communication lines (for example 4-20 mA lines).

The local energy storage 206 need not (only) comprise a battery, but may alternatively, or in combination, comprise a capacitor or super-capacitor.

Moreover, the measurement control unit (MCU) 200 may more generally be referred to as control circuitry 200, and the control circuitry 200 may include a microprocessor, microcontroller, programmable digital signal processor or another programmable device. The control circuitry may also, or instead, include an application specific integrated circuit, a programmable gate array or programmable array logic, a programmable logic device, or a digital signal processor. Where the control circuitry includes a programmable device such as the microprocessor, microcontroller or programmable digital signal processor mentioned above, the processor may further include computer executable code that controls operation of the programmable device.

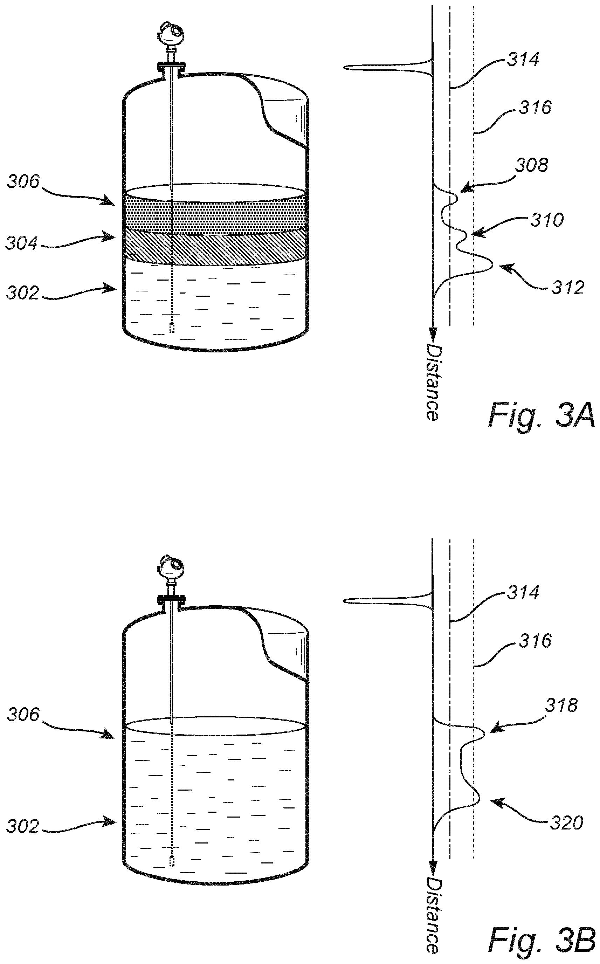

Fig. 3A schematically illustrates a tank 104 comprising a product 102 and an illustrative signal comprising echoes representing material interfaces in the tank resulting from a level measurement using the radar level gauge system 100. In Fig. 3A, the tank comprises, from the bottom, water 302, a mix 304 of hydrocarbons and water, and hydrocarbons 306 and the respective material interfaces are clearly distinguishable as peaks in the reflected signal.

The first peak 308 located closest to the top of the tank represents the interface between air (or the ambience in the tank) and hydrocarbon 306, the second peak 310 indicates the interface between hydrocarbon 306 and a layer 304 consisting of a mix or emulsion of hydrocarbon and water, and the third peak represents the interface between the mixed layer 304 and water 302.

Fig. 3A also illustrates the first threshold amplitude 314 and the second threshold amplitude 316. In the illustrated example, the first threshold amplitude 314 is lower than the second threshold amplitude 316, but the threshold amplitudes in any given implementation are determined for the specific conditions in the tank and of the system. Accordingly, in some applications, the first threshold amplitude may be higher than the second threshold amplitude. For example, the threshold amplitudes may be determined automatically based on the impedance of the probe and based on properties of the products in the tank such as dielectric constant.

In the illustrated example with clearly defined interfaces the surface level 108 is detected as the first peak 308 exceeding the first threshold amplitude 314, and the interface level between the hydrocarbon-water mix 304 and water 302 is detected as the peak 312 following the first peak 308 which exceeds the second threshold level 316. There is also a peak 310 arising at the interface between the hydrocarbon 306 and hydrocarbon-water mix 304 but since this peak 310 does not exceed the second threshold level 316 it is disregarded in the present context.

In Fig. 3B, the condition in the tank is different and no clear interfaces between the different material layers can be clearly distinguished. Instead, there is a more gradual transition between the layer of hydrocarbon 306 on top and the water layer 302 below. However, both a surface peak 318 and an interface peak 320 can still be detected by comparing peak amplitudes with the respective threshold amplitudes 314, 316.

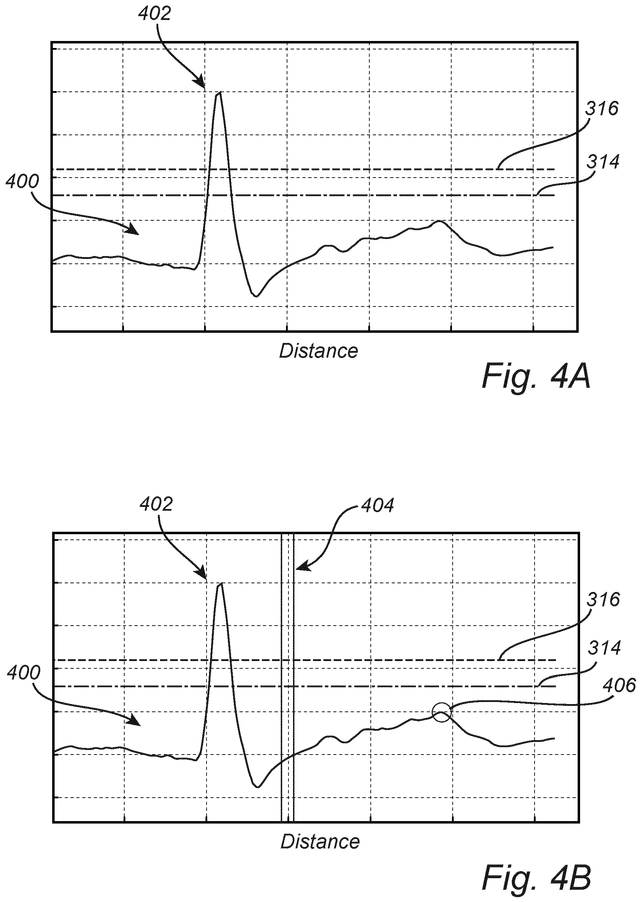

Fig. 4A schematically illustrates an example signal 400 where no interface peak is detected. In the graph, x-axis represents the distance from the top of the tank and the first peak 402 exceeding the first threshold amplitude 314 is thereby the surface peak 402. However, no second peak exceeding the second threshold level 316 is detected it is thereby a need to employ the sliding window peak detection algorithm to the signal to detect a second peak in the signal. Accordingly, the sliding window peak detection algorithm is preferably only applied when no interface signal is found using conventional threshold comparisons.

Fig. 4B schematically illustrates a sliding window 404 applied to the signal. By applying a sliding window peak detection algorithm to the signal, a second peak 406 in the signal can be detected, and a location of the material interface can be determined based on the location of the second peak 406. Using a sliding window provides a more stable value of the peak compared to for example looking for a max peak value since the interface reflection can be both fluctuating in amplitude and moving in position. Interface peaks in the reflected signal may also be smeared out making them difficult to detect.

The measurement may also include echo tracking where an echo representing the surface, the interface or both is tracked through consecutive measurements to further ensure that the echo used for determining a location of an interface or a surface is a true echo and not the result of a disturbance.

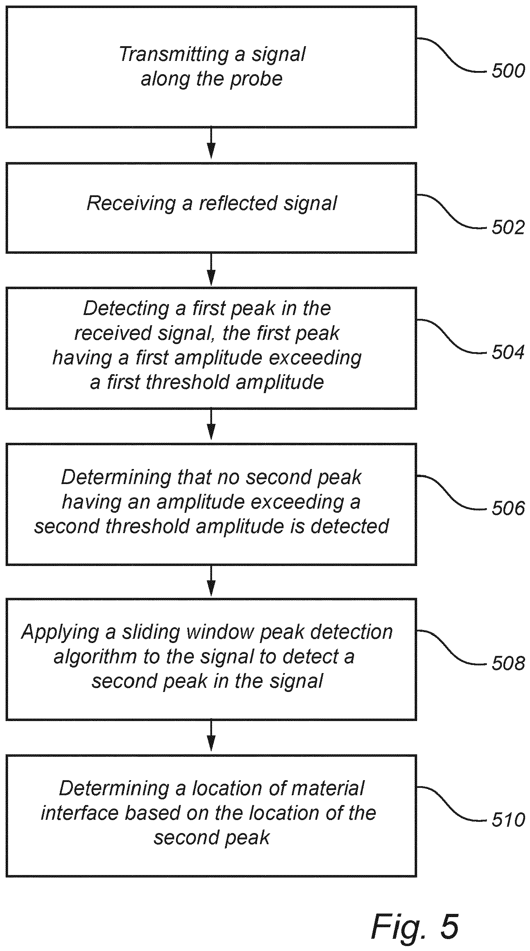

Fig. 5 is a flow chart outlining the general steps of a method according to an example embodiment. The method performed by the above described guided wave radar level gauge system 100 comprises, by the control circuitry, transmitting 500 a signal along the probe, receiving 502 a reflected signal, detecting 504 a first peak in the received signal, the first peak having a first amplitude exceeding a first threshold amplitude, determining 506 that no second peak having an amplitude exceeding a second threshold amplitude is detected, applying 508 a sliding window peak detection algorithm to the signal to detect a second peak in the signal, and determining 510 a location of a material interface based on the location of the second peak.

The described method thereby acts as a failover mode which is initiated when the regular measurement loop fails to detect an interface echo.

Furthermore, the described method may be part of a measurement loop for determining the location of the surface, where the location of an interface can be determined simultaneously. It would in principle also be possible to detect multiple interfaces using the described method of applying a sliding window to the received reflected signal.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A guided wave radar level gauge (100) for determining a fill level of a product (102) contained in a tank (104) comprising:
a measurement unit (106) comprising a transceiver (203) configured to provide a transmit signal, and to receive a reflected signal resulting from a reflection of the transmit signal at a surface (108) of the product;
a probe (110) connected to the transceiver and configured to propagate the transmit signal towards the surface and to return the reflected signal to the transceiver;
control circuitry (200) configured to determine the fill level based on the received reflected signal, the control circuitry being further configured to:
transmit a signal along the probe;
receive a reflected signal;
detect a first peak in the received signal, the first peak having a first amplitude exceeding a first threshold amplitude;
determine that no second peak having an amplitude exceeding a second threshold amplitude is detected;
apply a sliding window peak detection algorithm to the signal to detect a second peak in the signal; and
determining a location of a material interface based on the location of the second peak.

2. The guided wave radar level gauge according to claim 1,
wherein the control circuitry is further configured to determine an energy content of the signal for each position of the sliding window, and to determine the location of the interface as the window position having the highest energy content.

3. The guided wave radar level gauge according to any one of the preceding claims, wherein the control circuitry is further configured to determine that the first detected echo exceeding the first threshold amplitude represent a surface of the product in the tank.

4. The guided wave radar level gauge according to claim 3,
wherein the control circuitry is further configured to determine that the first detected echo after the surface echo exceeding the second threshold amplitude is an interface echo representing an interface of the product in the tank.

5. The guided wave radar level gauge according to any one of the preceding claims, wherein the control circuitry is further configured to adjust the determined location of the material interface based on known dielectric properties of the product in the tank.

6. The guided wave radar level gauge according to any one of the preceding claims, wherein the first threshold amplitude and the second threshold amplitude are set based on propagation properties of the probe and on known properties of the product in the tank.

7. Method of determining a location of a material interface in a tank using a guided wave radar level gauge (100), the radar level gauge comprising a measurement unit (106) comprising a transceiver (203) configured to provide a transmit signal, and to receive a reflected signal resulting from a reflection of the transmit signal at a surface (108) of the product;
a probe (110) connected to the transceiver and configured to propagate the transmit signal towards the surface and to return the reflected signal to the transceiver;
control circuitry configured to determine the fill level based on the received reflected signal, the method comprising, by the control circuitry:
transmitting (500) a signal along the probe;
receiving (502) a reflected signal;
detecting (504) a first peak in the received signal, the first peak having a first amplitude exceeding a first threshold amplitude;
determining (506) that no second peak having an amplitude exceeding a second threshold amplitude is detected;
applying (508) a sliding window peak detection algorithm to the signal to detect a second peak in the signal; and
determining (510) a location of a material interface based on the location of the second peak.

8. The method according to claim 7, further comprising:
determining (600) an energy content of the signal for each position of the sliding window; and
determining (602) the location of the interface as the window position having the highest energy content.

9. The method according to claim 7 or 8, further comprising defining the first detected echo exceeding the first threshold amplitude as a surface echo representing level of the product in the tank.

10. The method according to claim 9, further comprising determining that the first detected echo after the surface echo exceeding the second threshold amplitude is an interface echo representing an interface of the product in the tank.

11. The method according to any one of claims 7 to 10, further comprising adjusting the determined location of the material interface based on known dielectric properties of the product in the tank.

12. The method according to any one of claims 7 to 11, further comprising setting the first threshold amplitude and the second threshold amplitude based on propagation properties of the probe and on known properties of the product in the tank.

13. A computer program product comprising program code for performing, when executed by the control circuitry, the method of any of claims 7 to 12.

14. A non-transitory computer-readable storage medium comprising instructions, which when executed by the control circuitry, cause the processing circuitry to perform the method of any of claims 7 to 12.
